# EUROPEAN PATENT APPLICATION

(11) **EP 4 660 476 A1**
(43) Date of publication of application: **10.12.2025**
(21) Application number: 24179968.3
(22) Date of filing: 04.06.2024
(51) Int. Cl.: F16F 9/46, F16F 9/342, F16K 1/36, F16K 1/54

(54) **A NEEDLE FOR A VALVE ARRANGEMENT IN A SHOCK ABSORBER**

(71) Applicant: Öhlins Racing AB, 194 27 Upplands Väsby (SE)
(72) Inventor: POSTEC, Kevin, 19427 Upplands Väsby (SE)
(74) Representative: AWA Sweden AB

(57) **Abstract**

The disclosure relates to a needle (100) for a valve arrangement of a shock absorber. The needle (100) is adapted in size and shape to extend along a first axis (A), and to axially move in a bleed flow opening (210) of a valve arrangement (200) between a first axial position and at least a second axial position to regulate a bleed flow. The needle (100) comprises a needle portion (110) adapted such to engage with the bleed flow opening (210) to provide a first primary bleed flow channel (C1) and a secondary bleed flow channel (C2). The needle portion (110) is adapted so that when the needle (100) is in the first axial position, the first primary bleed flow channel (C1) is open and the secondary bleed flow channel (C2) is closed, and when the needle (100) is in the second axial position, at least the secondary bleed flow channel (C2) is open. Further, the needle portion (110) is adapted so that a channel cross-section of the second flow bleed channel (C2) changes at a higher rate than a channel cross-section of the first primary bleed flow channel (C1) in response to a change in axial position.

## Description

### TECHNICAL FIELD

The present application relates to a needle for a valve arrangement of a shock absorber for regulating a bleed flow in a shock absorber, a valve arrangement incorporating the same, a shock absorber incorporating the same, and a method for regulating a bleed flow in a shock absorber.

### TECHNICAL BACKGROUND

In a shock absorber, bleed flows can be utilized to modulate a rate of hydraulic fluid movement through the compression and rebound valves, thereby impacting damping characteristics of the shock absorber and consequently performance characteristics, such as ride comfort and handling.

Bleed flows may be modulated in terms of bleed flow rate by axially moving a bleed flow needle in a bleed flow opening. Since the bleed flow opening and the bleed flow needle are typically provided with cylindrical geometries, a change in axial position of the bleed flow needle impacts the size of the bleed flow opening.

Typically, the bleed flow needle is adapted so that there is a linear relationship between the axial position and bleed flow opening. This results in a regressive adjustment in damping forces generated. Since a bleed flow needle is typically limited to incremental adjustment positions of equal increment sizes, it is difficult to control resolution of damping force adjustment in a desired manner.

Accordingly, there exists a demand for providing an improved valve arrangement for regulating bleed flow.

### SUMMARY

At least some of the above-mentioned drawbacks are at least partly overcome by the present disclosure according to the independent claims. Preferred embodiments are set forth in the dependent claims. It would be advantageous to improve the capacity of valve arrangements regulating bleed flows in shock absorbers. To better address this concern, in accordance with a first aspect of the disclosure, there is provided a needle for a valve arrangement of a shock absorber, wherein the needle is adapted in size and shape to extend along a first axis, and to axially move in a bleed flow opening of a valve arrangement between a first axial position and at least a second axial position to regulate a bleed flow, wherein the needle comprises a needle portion adapted such to engage with the bleed flow opening to provide a first primary bleed flow channel and a secondary bleed flow channel, wherein the needle portion is adapted so that when the needle is in the first axial position, the first primary bleed flow channel is open and the secondary bleed flow channel is closed, and when the needle is in the second axial position, at least the secondary bleed flow channel is open, and wherein the needle portion is adapted so that a channel cross-section of the second flow bleed channel changes at a higher rate than a channel cross-section of the first primary bleed flow channel in response to a change in axial position. The present disclosure is based on the insight that the provided needle, when arranged in a bleed flow opening, having a shape capable of regulating the bleed flow-through the bleed flow opening by first opening a first primary bleed flow channel and then opening a secondary bleed flow channel, allows the bleed flow rate to increase progressively in response to even incremental movement of the needle. The term bleed flow may refer to the extraction, or bypassing of hydraulic fluid from a system. For example, damping fluid may be bypassed from a compression valve of a shock absorber via a bleed flow. The term bleed flow rate may refer to the volume or mass of hydraulic fluid extracted per unit of time in the bleed flow. By regulating the bleed flow rate, the damping force of the shock absorber can be controlled. As the force drop of the damping force depends on the square of the bleed flow rate, a progressive increase of bleed flow rate is required to yield a linear reduction of damping force. The ability of the present invention to generate a progressive increase of bleed flow rate as function of even incremental movement is therefore advantageous for enabling consistent adjustment of damping force, regardless of the magnitude of the bleed flow rate. In other words, the inventive concept enables an improved capacity to, from a constant incremental movement of the provided needle, generate a continuous change of damping force throughout the movement range of the needle. By movement range of the needle it may be meant the movement range to which it can be adjusted to control the bleed flow of hydraulic fluid, thereby influencing the damping characteristics of the shock absorber. For a first movement range, the needle is moveable from the first axial position to an intermediate axial position. The intermediate axial position is between the first axial position and the second axial position. The bleed flow may be relatively low when the needle is in the first axial position, and increase when the needle moves from the first axial position towards the second axial position. For a second movement range, the needle is moveable between the intermediate axial position and the second axial position. By a relatively low bleed flow, it may refer to a bleed flow which is low relative to a maximum bleed flow capacity. For instance, it may be 1-10%, 10-20%, 20-30%, 30-40%, 40-50%, or any combination thereof, of the maximum bleed flow capacity. Maximum bleed flow capacity is at least dependent on the design of the bleed flow opening and a bleed flow channel to which the bleed flow opening is associated. By a relatively high bleed flow, it may refer to a higher bleed flow relative the lower bleed flow. For instance, a relatively high bleed flow may be 51-60%, 60-70%, 70-80%, 80-90%, 90-100%, or any combination thereof, of the maximum bleed flow capacity. By a relatively high bleed flow rate it may be meant a bleed flow rate which is higher than a relatively low bleed flow rate. The split between the relatively high bleed flow rate and the relatively low bleed flow rate may be at any percentage of the maximum bleed flow capacity. For example, the split may be at 20-30%, at 30-40%, at 40-50 %, at 50-60 %, at 60-70%, at 70-80%, or any combination thereof, of the maximum bleed flow capacity. In the context of the application, by an element being moveable between a first position and at least a second position, it may be meant that the element is moveable to the first position and moveable to at least the second position. In contrast to a bleed needle only providing a single bleed flow channel for regulating bleed flow, the present invention, by providing two different bleed flow channels, allows for higher accuracy of regulating bleed flow rate. This because the provided needle may be adapted to provide the first primary bleed flow channel for regulating bleed flow at relatively low bleed flow rates, and the secondary bleed flow channel for regulating bleed flow at relatively high bleed flow rates. In the first movement range, the needle generates an opening of the first primary bleed flow channel while the secondary bleed flow channel is closed. Thus, the first primary bleed flow channel regulates bleed flow rate at low bleed flow rates. This is advantageous since the first primary bleed flow channel may be adapted for generated a desired bleed flow rate increase at low bleed flow rates. The present disclosure thus allows for improved opening sensitivity during the first movement range, which is advantageous better provide accurate regulation of damping force. Further, the secondary bleed flow channel opening at the second movement range is advantageous for, at relatively high bleed flow rates, providing an elevated increase of bleed flow rate. The secondary bleed flow channel may advantageously have a higher opening surface area than the first primary bleed flow channel. By opening surface area it may be meant the flow-through cross-sectional area. Providing a relatively high opening surface area for the bleed flow is advantageous for progressively increasing the bleed flow rate so to maintain a linear reduction of damping force at relatively high bleed flow rates. The channel cross-section of the secondary bleed flow channel changing at a higher rate than the channel cross-section of the first primary bleed flow channel is advantageous to provide a progressive increase of bleed flow rate throughout the movement range of the needle. In the first movement range the needle may provide a relatively low increase of bleed flow rate via the first primary bleed flow channel. In the second movement range the needle may provide a relatively high increase of bleed flow rate via at least the secondary bleed flow channel. The present invention thus advantageously provides means to regulate the bleed flow rate at a predictable and consistent progressivity at both low and high bleed flow rates. A further advantage with the provided needle is that it may replace an existing bleed flow needle of a shock absorber to improve a shock absorbers capacity to accurately regulate bleed flow rate. The needle of the present disclosure may for example provide the same settings of an old bleed flow needle which only uses a single bleed flow channel to regulate the bleed flow, and replace it. The shock absorber may thereby provide the advantages of the present invention as presented in this application.

According to an embodiment, the needle portion comprises a first primary recess and a secondary recess, wherein, during use, the needle is axially moveable so that the first primary bleed flow channel is at least partly provided by the first primary recess and the secondary bleed flow channel is at least partly provided by the secondary recess. The first primary recess may thereby advantageously be adapted so as to provide the desired rate of bleed flow increase when needle moves in the first movement range. The first primary recess may thereby primarily control the bleed flow rate at relatively low bleed flow rates and can thus have a shape optimized to promote an accurate progressive increase of bleed flow rate through the first movement range. In addition, having the first primary recess, together with the bleed flow opening, provide the first primary bleed flow channel is advantages since the shape of the first primary recess may determine the channel cross-section of the first primary bleed flow channel. The fact that only the shape of the needle determines the cross-sectional area of the first primary bleed flow channel, as opposed to two components, is an advantage in minimizing variability due to manufacturing tolerances. Further, the secondary recess may advantageously be adapted such to allow a relatively large increase of bleed flow rate when the needle moves through the second movement range.

According to an embodiment, the needle is adapted so that the channel cross-section of the first primary bleed flow channel increases when the needle is moved from the first axial position towards the intermediate axial position in the first direction of the first axis, and the needle is adapted so that the channel cross-section of the secondary bleed flow channel increases when the needle is moved from the intermediate axial position to the second axial position in the first direction of the first axis. This is advantageous for enabling a bleed flow increase throughout the movement range of the needle.

According to an embodiment, the needle is adapted so that when moved from the first axial position, in a first direction the channel cross-section of the first primary bleed flow channel progressively increases, and/or the needle is adapted so that when moved from the intermediate axial position, in the first direction, the channel cross-section of the secondary bleed flow channel progressively increases. The channel cross-section of the first primary bleed flow channel progressively increasing is advantageous for maintaining a continuous force reduction as of moving the needle within the first movement range. The channel cross-section of the secondary bleed flow channel progressively increasing is advantageous for maintaining a continuous force reduction as of moving the needle within the second movement range. The size and shape of each of the first primary bleed flow channel and the secondary bleed flow channel may advantageously be adapted to provide the desired progressivity on bleed flow rate.

According to an embodiment, the first primary recess comprises a primary surface with a surface-normal pointing at least partly away from the first axis and at least partly towards the first axial end. This is advantageous for providing a progressive increase of the channel cross-section of the first primary bleed flow channel. It also facilitates the manufacturing process of the first primary recess as it is easily accessible by a machine.

According to an embodiment, the first primary recess comprises a primary surface which is a curved surface. This is advantageous for providing a progressive increase of the channel cross-section of the first primary bleed flow channel.

According to an embodiment, the secondary recess is at least partly provided by a V-shaped cut-out. Using a V-shaped cut-out is advantageous for efficiently increasing the channel cross-section of the secondary bleed flow channel. Additionally the shape is easy to manufacture with high accuracy.

According to an embodiment, the widest part of the V-shaped cut-out is arranged at the first axial end and the corner of the V-shaped cut-out is arranged between the first axial end and the radial section. This is advantageous for enabling the channel cross-section of the secondary bleed flow channel to increase when the needle moves from the intermediate axial position to the second axial position.

According to an embodiment, the secondary recess divides the first axial end into two portions. This is advantageous for enabling the secondary bleed flow channel to exit the bleed flow opening at two opposite sides of the needle portion, thus enabling a high bleed flow rate.

According to an embodiment, the needle portion comprises abutting means adapted to abut against a boundary of the bleed flow opening when the needle is in the first axial position and in the second axial position. The needle portion having abutting means which are adapted to enable the needle portion, within the movement range of the needle, to abut the bleed flow opening is advantageous for stabilizing the needle portion. Forces from the bleed flow will thus not cause the needle portion to tilt or vibrate causing irregularities or inconsistent bleed flow regulation through the first primary bleed flow channel and/or the secondary bleed flow channel. The abutting means will advantageously prevent the needle portion from moving in a direction which is perpendicular to the first axis for stabilizing it. As a non-limiting example, the abutting means may be adapted to enable radial support of the needle when axially moving in the bleed flow opening. As a non-limiting example, the abutting means may substantially prevent radial movement of the needle portion inside the bleed flow opening. As a non-limiting example, the abutting means may comprise one or more radial surfaces which are adapted to be in contact with an inside of the bleed flow opening.

According to an embodiment, the needle portion comprises a second primary recess at the first axial end at least partly forming a second primary bleed flow channel wherein optionally which second primary recess is at least radially symmetrical to the first primary recess, and/or the first primary recess and the second primary recess are different in shape. This is advantageous for increasing the bleed flow rate when the needle moves through the first movement range. Having multiple primary recesses which are relatively small as oppose to one large recess may be advantageous for minimizing manufacturing tolerances. Additionally, having a plurality of small recess may cause lesser radial impact in the needle portion relative having one large recess. In addition, having multiple primary recesses may allow each primary recess to inherit a specific shape, which may be different to the at least one other primary recess to generate a specific change of flow rate. This may be advantageous in designing the needle so as to regulate the bleed flow rate precisely to a user's requirements.

According to an embodiment, the needle comprises a needle protrusion at the needle portion, wherein the needle protrusion is adapted to at least partly disrupt the bleed flow exiting at least the first primary bleed flow channel so to create turbulence in the bleed flow. The needle protrusion disrupting the bleed flow exiting the first primary bleed flow channel is advantageous to force turbulence in the bleed flow. When the bleed flow is accelerated from a constant condition, the bleed flow is initially laminar and becomes turbulent after a certain flow velocity has been reached. When the bleed flow transitions from being laminar to being turbulent, flow characteristics of the bleed flow may change. This may cause unpredictable and irregular damping characteristics when used in of a shock absorber for regulating damping force. Thus by generating turbulence in the bleed flow, the predictability of a shock absorber's damping characteristics may be improved.

According to a second aspect of the present disclosure, there is provided a valve arrangement as disclosed herein, comprising a bleed flow opening as disclosed herein, and a needle as disclosed herein, wherein the needle is adapted to axially move in the bleed flow opening, wherein the first primary bleed flow channel is at least formed between the primary surface of the needle and a primary boundary portion of the bleed flow opening, and the secondary bleed flow channel is at least formed between a secondary surface of the needle and a secondary boundary portion of the bleed flow opening. This is advantageous for providing a valve arrangement with all the advantages originating from the needle as disclose herein. The valve arrangement may advantageously be mounted in a shock absorber for regulating bleed flow.

According to a third aspect of the present disclosure, there is provided a shock absorber comprising a needle as disclosed herein. This is advantageous for providing a shock absorber with all the advantages provided by the needle as disclosed herein. When arranged with a shock absorber, the shock absorber may accurately regulate bleed flow rate at low flow rates and have the capacity to progressively increase the bleed flow rate as a function of a continuous motion of the needle.

According to a fourth aspect of the present disclosure, there is provided a method for regulating a bleed flow in a shock absorber. The method comprises providing a needle as disclosed herein, providing the needle in the first axial position such that the first primary bleed flow channel is open and the secondary bleed flow channel is closed, operating the needle to the second axial position such that at least the secondary bleed flow channel is open. This provides for an efficient method for regulating bleed flow in a shock absorber. During relatively low bleed flow rates accurate regulation of the bleed flow rate is required. When the needle is in first position it may regulate bleed flow only though the first primary bleed flow channel. The method may thus regulate bleed flow at low flow rates with high accuracy. When operating the needle to the second axial position the needle may advantageously regulate the bleed flow rate via the secondary bleed flow channel. The secondary bleed flow channel may be shaped so to generate a larger increase of bleed flow rate as a result of moving the needle in the first direction along the first axis. This is advantageous for progressively increasing the bleed flow rate at relatively high bleed flow rates.

A feature described in relation to one aspect may also be incorporated in other aspects, and the advantage of the feature is applicable to all aspects in which it is incorporated. Other objectives, features and advantages of the present disclosure will appear from the following detailed disclosure, from the attached claims as well as from the drawings. Generally, all terms used in the claims are to be interpreted according to their ordinary meaning in the technical field, unless explicitly defined otherwise herein. Further, the use of terms "first", "second", and "third", and the like, herein do not denote any order, quantity, or importance, but rather are used to distinguish one element from another. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### BREIF DESCRIPTION OF THE DRAWINGS

The present disclosure is described in the following illustrative and non-limiting detailed description of exemplary embodiments, with reference to the appended drawings, wherein:
Fig. 1a-b shows a cross-sectional side-view of a valve arrangement and a needle according to an embodiment of the disclosure;
Figs. 2 shows a cross-sectional side-views of a valve arrangement and a needle according to an embodiment of the disclosure;
Fig. 3 shows a perspective view of a needle according to an embodiment of the present disclosure;
Figs. 4a-4c each show a cross-sectional side-view of a valve arrangement and a needle according to an embodiment of the disclosure;
Fig. 5 shows a cross-sectional side-view a shock absorber provided with a needle according to one embodiment of the present disclosure, wherein said needle is arranged internally;
Fig. 6 shows a schematic flow chart of a method according to one embodiment of the disclosure.

### DESCRIPTION OF EMBODIMENTS

Hereinafter, the present disclosure in various aspects will be described with reference to the illustrative embodiments. All figures are schematic, not necessarily to scale, and generally only show parts which are beneficial in order to elucidate the disclosure, wherein other parts may be omitted or merely suggested. Throughout the figures the same reference signs designate the same, or essentially the same features. Various elements and arrangements are schematically depicted in the drawings for purposes of explanation only and so as to not obscure the description with details that are well known to those skilled in the art. Nevertheless, the attached drawings are included to describe and explain illustrative examples of the disclosed subject matter.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

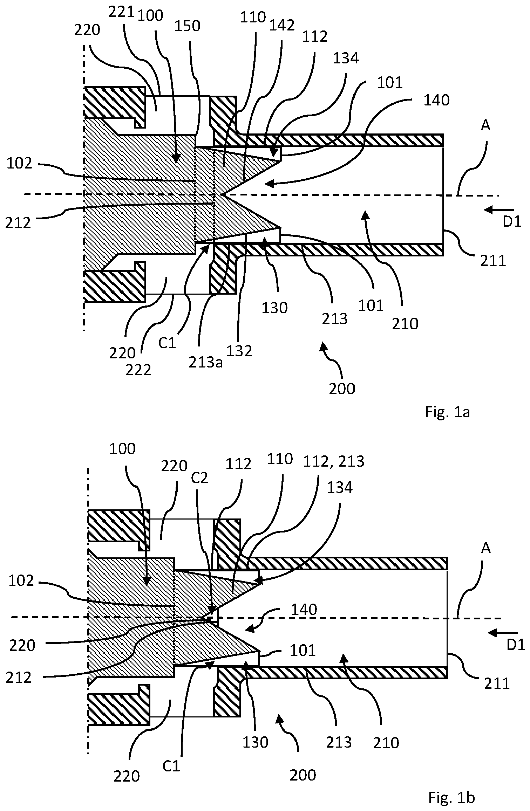

Figs. 1a-b shows a cross-sectional view of a needle 100 for a valve arrangement of a shock absorber. The needle 100 is adapted in size and shape to extend along a first axis A, and to axially move in a bleed flow opening 210 of a valve arrangement 200 between a first axial position and at least a second axial position to regulate a bleed flow. The needle 100 comprises a needle portion 110 adapted such to engage with the bleed flow opening 210 to provide a first primary bleed flow channel C1 and a secondary bleed flow channel C2. The needle portion 110 is adapted so that when the needle 100 is in the first axial position, the first primary bleed flow channel C1 is open and the secondary bleed flow channel C2 is closed, and when the needle 100 is in the second axial position, at least the secondary bleed flow channel C2 is open. The needle portion 110 is adapted so that a channel cross-section of the second flow bleed channel C2 changes at a higher rate than a channel cross-section of the first primary bleed flow channel C1 in response to a change in axial position. In Figs. 1a-b, the valve arrangement 200 is shown. The valve arrangement 200 may be arrangeable in a shock absorber so as to regulate a bleed flow therein. The valve arrangement 200 may refer to an arrangement comprising a valve for regulating a flow, or more specifically a bleed flow. Alternatively, the valve arrangement 200 may refer to an arrangement comprising a channel adapted to serve as a bleed flow channel. The bleed flow opening 210 may be an opening in the valve arrangement 200 arrangeable to allow bleed flow-through it. The bleed flow may be a flow of hydraulic fluid. The bleed flow opening 210 may have longitudinal extension from a first end 211, to a second end 212, which is opposite to the first end 211. The second end 212 may be a circular opening. The bleed flow opening 210 may comprise a boundary 213 with a circumferential extension around the longitudinal extension of the bleed flow opening 210. The valve arrangement 200 may provide a bleed flow chamber 220. The bleed flow opening 210 may be connected to the bleed flow chamber 220 at the second end 212 thereof. The valve arrangement 200 may be arrangeable in a shock absorber so that a bleed flow may flow from the first end 211 of the bleed flow opening 210, via the second end 212 of the bleed flow opening 210, to the bleed flow chamber 220. The needle 100 may be adapted to be mounted in the valve arrangement 200 such that it may be regulated to move along the first axis A in the bleed flow opening 210. The needle 100 is movable relative the bleed flow opening 210. The needle 100 has a longitudinal extension along the first axis A in a first direction D1 thereof, from a first axial end 101, to a second axial end (not shown). The needle portion 110 may extend from the first axial end 101, along the first axis A, to a transverse cut 102 of the needle 100. The transverse cut 102 may be a fictive slice or cut perpendicular to longitudinal extension of the needle 100. The needle portion 110 may have a cylindrical shape along the first axis A. In Fig. 1a, the needle 100 is shown in the first axial position. The needle portion 110 may be adapted in size and shape so that when the needle 100 is in the first axial position, the first primary bleed flow channel C1 is formed between the needle portion 110 and the bleed flow opening 210. More specifically, the first primary bleed flow channel C1 may be formed between the needle portion 110 and the boundary 213 of the bleed flow opening 210. The needle portion 110 may for example provide at least one of a recess, a hole, or an irregularity, which, together with the bleed flow opening 210, forms the first primary bleed flow channel C1. In Fig. 1b, the needle 100 is shown in the second axial position. The needle portion 110 may be adapted in size and shape so that when the needle 100 is in the second axial position, the secondary bleed flow channel C2 is formed between the needle portion 110 and the bleed flow opening 210. More specifically, the first secondary bleed flow channel C2 may be formed between the needle portion 110 and the boundary 213 of the bleed flow opening 210. The needle portion 110 may for example provide at least one of a recess, a hole or an irregularity which, together with the bleed flow opening 210, forms the secondary bleed flow channel C2. When the needle 100 is in the second axial position, the first primary bleed flow channel C1 and the secondary bleed flow channel C2 may be open. The needle portion 110 is adapted in size and shape so that the channel cross-section of the first secondary bleed flow channel C2 changes at a higher rate than the channel cross-section of the first primary bleed flow channel C1 in response to a change in axial position of the needle 100 relative the bleed flow opening 210.

According to an embodiment, the needle portion 110 comprises a first primary recess 130 and a secondary recess 140. During use, the needle 100 is axially moveable so that the first primary bleed flow channel C1 is at least partly provided by the first primary recess 130 and the secondary bleed flow channel C2 is at least partly provided by the secondary recess 140. Each of the first primary recess 130 and the secondary recess 140 may, separately from each other, extend from the first axial end 101 along the needle portion 110 towards the transverse cut 102. The first primary recess 130 extends closer to the transverse cut 102 than the secondary recess 140. With reference to Fig. 1a where the needle 100 is shown in the first axial position, the first primary bleed flow channel C1 is formed between the needle portion 110 and the bleed flow opening 210. More specifically, the first primary bleed flow channel C1 may be formed between the first primary recess 130 and the boundary 213 of the bleed flow opening 210. The first primary bleed flow channel C1 may allow hydraulic fluid to flow from the first end 211 of the bleed flow opening 210 to the bleed flow chamber 220. When the needle 100 is in the first axial position, the secondary recess 140 may be disconnected from the bleed flow chamber 220 by the boundary 213 of the bleed flow opening 210. Hydraulic fluid is thus prevented from flowing through the secondary bleed flow channel C2. With reference to Fig. 1b, where the needle 100 is shown in the second axial position, the first secondary bleed flow channel C2 is formed between the needle portion 110 and the bleed flow opening 210. More specifically, the secondary bleed flow channel C2 may be formed between the secondary recess 140 and the boundary 213 of the bleed flow opening 210. The secondary bleed flow channel C2 may allow hydraulic fluid to flow from the first end 211 of the bleed flow opening 210 to the bleed flow chamber 220. In the shown embodiment, when the needle 100 is in the second axial position, the first primary bleed flow channel C1 and the first secondary bleed flow channel C2 are open. The secondary recess 140, which together with the boundary 213 may form the secondary bleed flow channel C2 may be shaped such that the channel cross-section of the secondary bleed flow channel C2 changes at a higher rate than the channel cross-section of the first primary bleed flow channel C1 in response to a change in axial position of the needle 100 relative the bleed flow opening 210. The needle 100 may be movable to a closed axial position so that the needle portion 110 blocks the bleed flow opening 210 and thereby prevents the bleed flow to flow-through the bleed flow opening 210. The needle portion 110 may be adapted to block the bleed flow opening 210 at the second end 212 thereof.

According to an embodiment, the needle 100 is adapted so that the channel cross-section of the first primary bleed flow channel C1 increases when the needle 100 is moved from the first axial position towards an intermediate axial position in the first direction D1 of the first axis A. The needle 100 is further adapted so that the channel cross-section of the secondary bleed flow channel C2 increases when the needle 100 is moved from the intermediate axial position to the second axial position in the first direction D1 of the first axis A. The first primary recess 130 may be shaped so that it becomes deeper towards the first axial end 101. Thus when the needle 100 moves from the first axial position towards the intermediate axial position the cross-sectional area of the first primary bleed flow channel C1 increases. The secondary recess 140 may be shaped so that it becomes wider towards the first axial end 101. Thus, when the needle 100 moves from the intermediate axial position towards the second axial position, the cross-sectional area of the secondary bleed flow channel C2 increases.

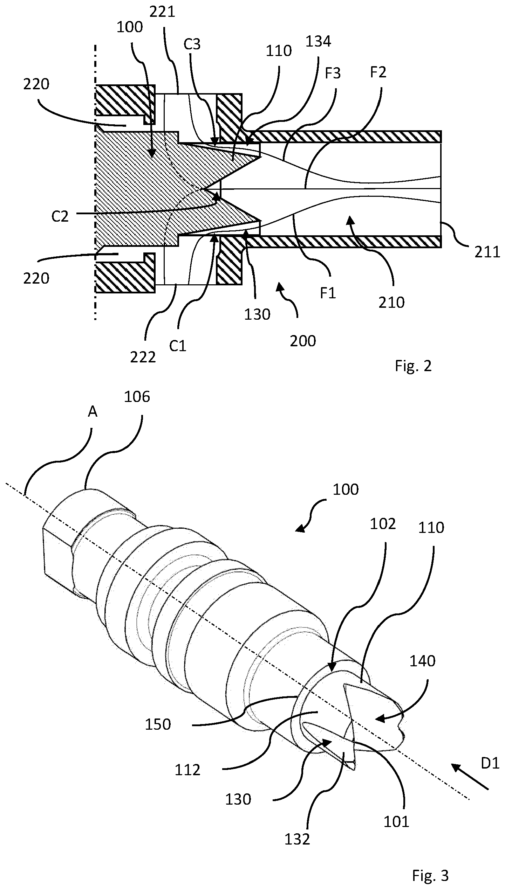

According to an embodiment, the needle 100 is adapted so that when moved from the first axial position, in the first direction D1 the channel cross-section of the first primary bleed flow channel C1 progressively increases, and/or the needle 100 is adapted so that when moved from the intermediate axial position, in the first direction D1, the channel cross-section of the secondary bleed flow channel C2 progressively increases. The first primary recess 130 may be shaped such that it becomes deeper and wider towards the first axial end 101 for enabling the channel cross-section of the first primary bleed flow channel C1 to progressively increase when the needle 100 moves in the first direction D1 from the first axial position. Alternatively, the depth or width may be curved for creating a progressive flow increase. The secondary recess 140 may be shaped such that it becomes progressively wider towards the first axial end 101 for enabling the channel cross-section of the secondary bleed flow channel C2 to progressively increase when the needle 100 moves in the first direction D1 from the first axial position. In addition, when the needle 100 is moved from the first axial position to the second axial position, the total bleed flow-through the first primary bleed flow channel C1 and the secondary bleed flow channel C2 progressively increases. This because when the needle 100 moves from the first position towards the intermediate axial position, the total bleed flow increase may only originate from the first primary bleed flow channel C1. When the needle 100 moves from the intermediate axial position towards the second axial position, the total bleed flow increase will originate from the sum of the first primary bleed flow channel C1 and the secondary bleed flow channel C2. Thus when the needle 100 moves in the first direction from the first axial position to its second axial position the total bleed flow increases progressively. Now with reference to Fig. 2. The needle 100 is shown in valve arrangement 200 in the second axial position. In the exemplified embodiment, the needle portion 110 comprises a first primary recess 130 and a second primary recess 134. Thus the needle portion 110 may provide a first primary bleed flow channel C1 and a second primary bleed flow channel C3. A first fluid flow path F1 is indicated as a flow path from the first end 211 of the bleed flow opening 210, via the first primary bleed flow channel C1, to the bleed flow chamber 220 and the second bleed flow chamber outlet 222. A second fluid flow path F2 is indicated as a flow path from the first end 211 of the bleed flow opening 210, via the secondary bleed flow channel C2, to the bleed flow chamber 220 and the first bled flow chamber outlet 221 and the second bleed flow chamber outlet 222. When the needle 100 is moved to the first axial position, the secondary bleed flow channel C2 is closed, resulting in that the bleed flow can only pass the needle portion 110 via the first primary bleed flow channel C1 and the second primary bleed flow channel C3. The needle 100 is shown in an isometric view in Fig. 3 with a longitudinal extension from the first axial end 101 to the second axial end 106. The first primary recess 130 extends from the first axial end 101 so that it is closer to the transverse cut 102 relative the secondary recess 140. The depth and width of the first primary recess 130 may increase towards the first axial end 101. The width of the secondary recess 140 may increase towards the first axial end 101. The needle portion 110 may further provide a radial side 112. The radial side 112 circumferentially extends around the first axis A. The radial side 112 may have a longitudinal extension in parallel with the first axis A from the first axial end 101 to the transverse cut 102. The needle 100 may further provide a needle protrusion 150 which protrude perpendicularly away from the first axis A at the transverse cut 102. Alternatively, the needle protrusion 150 may protrude away from the first axis A at other angles than perpendicularly.

Now again with reference to Fig. 1a. According to an embodiment, the first primary recess 130 comprises a primary surface 132 with a surface-normal pointing at least partly away from the first axis A and at least partly towards the first axial end 110. The primary surface 132 may be angled relative the first axis A. The primary surface 132 may extend from the transverse cut to the first axial end 101 and sloping inwards towards the center of the needle portion 110.

Now with reference to Fig. 3. According to an embodiment, the first primary recess 130 comprises a primary surface 132 which is a curved surface. Thus, the first primary recess may be a cylindrical cut. The primary surface 132 may be curved away from the center of the needle portion 110. The dept of the first primary recess may increase in dept towards the first axial end 101.

According to an embodiment, the secondary recess 140 is at least partly provided by a V-shaped cut-out. Alternatively, the secondary recess 140 may at least partly be provided by a U-shaped cut-out or a semi-circular cut-out. Alternatively, the secondary recess 140 may be at least be provided by a combination of one or more of a V-shaped cut-out, a u-shaped cut-out and a semi-circular cut-out.

According to an embodiment, the widest part of the V-shaped cut-out is arranged at the first axial end 101 and the corner of the V-shaped cut-out is arranged between the first axial end 101 and the transverse cut 102.

According to an embodiment, the secondary recess 140 divides the first axial end 101 into two portions. The secondary recess 140 may thereby extend at opposite sides of the radial side 112. Thereby, the hydraulic fluid flowing from the bleed flow opening 210, through the secondary bleed flow channel C2, to the bleed flow chamber 220, may split into two separate branches. Wherein each branch exits the needle portion 110 at the second end 212 of the bleed flow opening 210 at opposite sides of the needle portion 110.

According to an embodiment, the needle portion 110 comprises abutting means adapted to abut against a boundary 212 of the bleed flow opening 210 when the needle is in the first axial position and in the second axial position. The abutting means may be adapted to restrict the needle portion 110 in all direction perpendicular to the first axis A. In the exemplified embodiment, the abutting means comprises the radial side 112. The radial side 112 may fit the bleed flow opening 210. Thus the radial side 112 is adapted to abut the boundary 213 of the bleed flow opening 210 throughout the movement range of the needle 100. The radial side 112 may only partly circumferentially extend along the needle portion 110 around the first axis A. The radial side 112 may for example have interruptions or discontinuities from the first primary recess 130 or the secondary recess 140. As seen in Fig. 1a, when the needle is in its first axial position the radial side 112 abut the boundary 213 of bleed flow opening 210. As seen in Fig. 1b, when the needle 100 is in its second axial position, the radial side 112 abut the boundary 213 of bleed flow opening 210. The radial side 112 advantageously abuts the boundary 213 at three positions thus preventing movement of the needle portion 110 which is perpendicular to the first axis A. Alternatively, or in combination, the needle portion may provide abutting means other than the radial side 112. Another example of abutting means may be a first protrusion and a second protrusion, wherein the first protrusion abuts the boundary 213 of the bleed flow opening 210 when the needle is in the first axial position and the second protrusion abuts the boundary 213 when the needle 100 is the second axial position. In this example, at least one of the first protrusion and the second protrusion abuts the boundary 213 throughout the movement range of the needle 100. Now with reference to Fig. 1a. According to an embodiment, the needle portion 110 comprises a second primary recess 134 at the first axial end 110 at least partly forming a second primary bleed flow channel C3. The second primary recess 134 may be at least radially symmetrical to the first primary recess 130. Alternatively, the first primary recess 130 and the second primary recess 134 may be different in shape. The second primary recess 134 may extend equally far from the first axial end 110 towards the transverse cut 102 as the first primary recess 130. Thus, when then needle 100 is in the in the first axial position, the first primary bleed flow channel C1 and the second primary bleed flow channel C2 may be open. The first primary recess 130 and the second primary recess 134 may be radially symmetrical in shape around the center axis A. The first primary recess 130 and the second primary recess 134 may be symmetrical about a center plane extending along the first axis A. The first primary recess 130 and the second primary recess 134 may be different in shape compared to each other, for example by having different dept, width, or angle towards the center of the needle portion 110. The first primary recess 130 and the second primary recess 134 may have a different shape relative each other for the purpose of together regulating the bleed flow according to a desired bleed flow rate when the needle moves from the first axial position in the first direction D1. The first primary recess 130 and the second primary recess 134 may have different shapes to affect the bleed flow rate increase differently in response to axial movement of the needle 100. This may be advantageous in the manufacture of the needle 100, as the first primary recess 130 may inherit first shape to generate a bleed flow increase at a first rate, and the second primary recess 134 may inherit a second shape to generate a bleed flow increase at a second rate. This may be advantageous in designing the needle 100 so as to control the bleed flow rate precisely to the user's requirements. It is conceivable that the needle portion 110 comprises additional primary recesses forming additional primary bleed flow channels. The needle portion 110 may for example comprise at least one of a third primary recess and a fourth primary recess. The needle portion 110 may comprise more than four primary recesses. The plurality of primary recesses may be evenly distributed along the circumference of the needle portion 110. Alternatively, the plurality of primary recesses may be unevenly distributed along the circumference of the needle portion 110.

According to an embodiment, the needle 100 comprises a needle protrusion 150 at the needle portion 110, wherein the needle protrusion 150 is adapted to at least partly disrupt the bleed flow exiting at least the first primary bleed flow channel C1 so to create turbulence in the bleed flow. The needle protrusion 150 may protrude perpendicularly away from the first axis A at the transverse cut 102. The needle protrusion 150 may circumferentially extend around the first axis A. Alternatively, the needle protrusion 150 may extend along the transverse cut 102 after the first primary bleed flow channel C1 in the direction of the bleed flow. Alternatively, if the needle portion comprises a plurality of primary bleed flow channels, the needle protrusion 150 may extend along the transverse cut 102 after each of the plurality of primary bleed flow channels.

The needle protrusion 150 may extend away from the first axis A at angles other than perpendicular to the axis. At least one technical effect of the needle protrusion 150 is that it may disrupt the bleed flow exiting the at least one primary bleed flow channel so that it may become turbulent. The needle protrusion 150 may for example taper relative the first axis A in a direction towards the first axial end 101 at an angle in the interval of 5 to 90 degrees.

Now with reference to Fig. 1a. According to a second aspect of the present disclosure, there is provided a valve arrangement 200 as disclosed herein, comprising a bleed flow opening 210 as disclosed herein, and a needle 100 as disclosed herein, wherein the needle 100 is adapted to axially move in the bleed flow opening 210, wherein the first primary bleed flow channel C1 is at least formed between the primary surface 132 of the needle 100 and a primary boundary portion 213a of the bleed flow opening 210, and the secondary bleed flow channel C2 is at least formed between a secondary surface 142 of the needle 100 and a secondary boundary portion 212 of the bleed flow opening 210.

The valve arrangement 200 may be arrangeable to regulate a bleed flow in a shock absorber which flows from the first end 211 of the bleed flow opening, via the second end 212 of the bleed flow opening 210, to the bleed flow chamber 220. The bleed flow may exit the bleed flow chamber 220 at least one of a first flow chamber outlet 221 and a second bleed flow chamber outlet 222 thereof.

The boundary 213 of the bleed flow opening 210 provides the first boundary portion 213a, and the second boundary portion (not shown).

In the exemplified embodiment, the first boundary portion 213a may be defined as a surface portion of the boundary 213 that together with the first primary surface 132 forms the first primary bleed flow channel C1. The first boundary portion 213a may be defined as the portion of the boundary 213 which is adjacent the first primary surface 132 when the needle 100 is in its closed axial position. The secondary recess 140 provides the secondary surface 142 which may be defined as the interior surface of the secondary recess 140. In the exemplified embodiment the secondary surface 142 is the two interior planar surfaces of the V-shaped cut-out. The second boundary portion may be defined as a portion of the boundary 213 that together with the secondary surface 142 forms the secondary bleed flow channel C2.

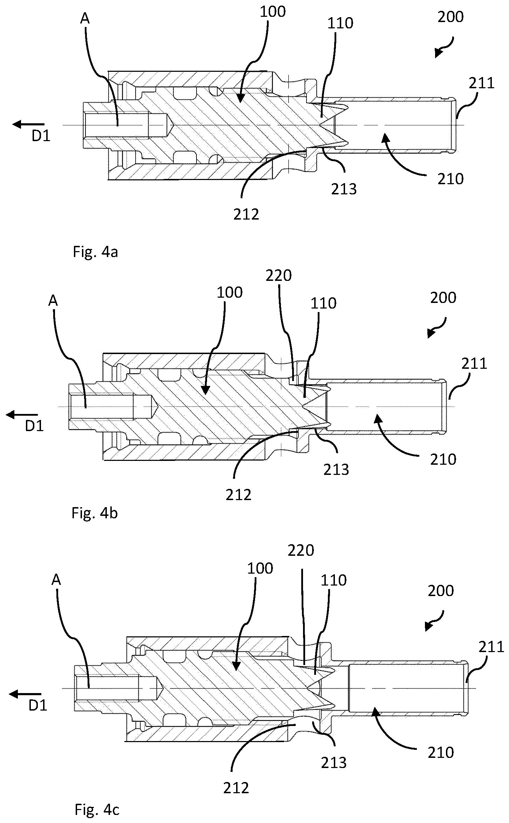

Now with reference to Fig. 4a and Fig. 2. The needle 100 is arranged in the valve arrangement 200 and positioned in a closed axial position. When the needle 100 is in the closed axial position the needle 100 abuts the bleed flow opening 210 at the second end 212 thereof. In the shown embodiment, when the needle 100 is in the closed axial position the needle 100 prevents hydraulic fluid to flow-through the bleed flow opening 210. When the needle 100 in the closed axial position the first primary bleed flow channel C1 is closed, the second primary channel C3 is closed, and the secondary bleed flow channel C2 is closed.

Now with reference to Fig. 4b and Fig. 2. The needle 100 is arranged in the valve arrangement 200 in the in the first axial position. The needle 100, when in the first axial position, is positioned further in the first direction D1 along the first axis A than when the needle 100 is positioned in the closed axial position. The needle 100 may be operable, relative the bleed flow opening 210, in the first direction D1 along the first axis A, from the closed axial position to the first axial position. When the needle 100 is in the first axial position, hydraulic fluid may flow-through the bleed flow opening, via the first primary bleed flow channel C1 and the second primary bleed flow channel C3, to the bleed flow chamber 220.

Now with reference Fig. 4c and Fig. 2. The needle 100 is arranged in the valve arrangement 200 in the second axial position. The needle 100, when in the second axial position, is positioned further in the first direction D1 along the first axis A than when the needle 100 is in the first axial position. The needle 100 may be operable, relative the bleed flow opening 210, in the first direction D1, along the first axis A, from the first axial position to the second axial position. When the needle 100 is in the second axial position hydraulic fluid may flow-through the bleed flow opening 210, via the first primary bleed flow channel C1, the second primary bleed flow channel C3, and the secondary bleed flow channel C2, to the bleed flow chamber 220.

The needle is movable relative the bleed flow opening 210 to an intermediate axial position (not shown). When the needle 100 is in the intermediate axial position, it is arranged between the first axial position and the second axial position. When the needle 100 is in the intermediate axial position and moves in the first direction D1, along the first axis A relative the bleed flow opening 210, the secondary bleed flow channel C2 transitions from being closed to open. The needle may be operable in the first direction D1 and a second direction. Which second direction is opposite the first direction D1.

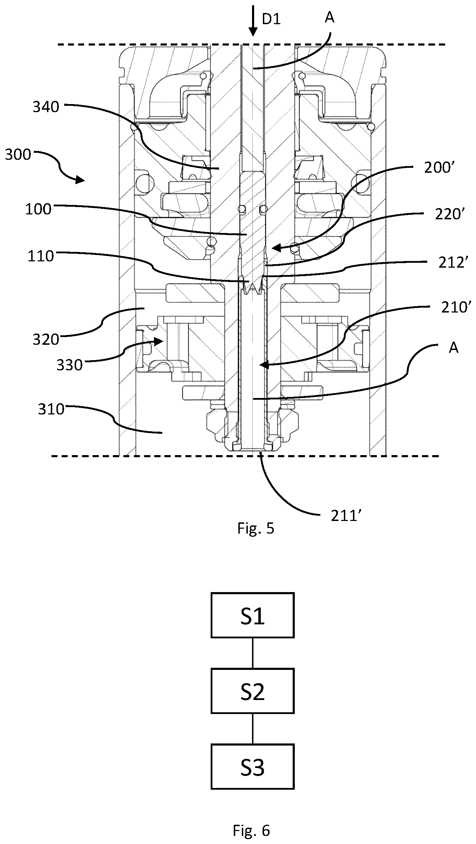

Now with reference to Fig. 5. According to a third aspect of the present disclosure, there is provided a shock absorber 300 comprising a needle 100 as disclosed herein. The needle 100 may be mounted directly in the shock absorber 300 for regulating a bleed flow therein. The shock absorber 300 may comprise a first chamber 310 and a second chamber 320. A damping flow valve arrangement 330 may regulate the damping flow between the first chamber 310 and the second chamber 320. The shock absorber 300 may further comprise shaft 340 movable mounted in the shock absorber 300. The shaft 340 may comprise a valve arrangement 200' providing a bleed flow opening 210'. The valve arrangement 200' may be arranged to bypass damping fluid past the damping flow valve arrangement 330. Thus the valve arrangement 200' may provide a fluid flow path fluidly connecting the first chamber 310 and the second chamber 320. The valve arrangement 200' may provide a bleed flow opening 210' extending from a first end 211' to a second end 212'. The first end 211' may be positioned within the first chamber 310 and fluidly connected thereto. The second end 212' may be fluidly connected to a bleed flow chamber 220' of the valve arrangement 200'. The chamber 200' may be fluidly connected, via a bleed flow chamber outlet (not shown), to the second chamber 320. The needle 100 may be arranged within the valve arrangement 200' so that it is movable along the first axis A between the closed axial position, the first axial position, and the second axial position, for regulating bleed flow though the valve arrangement 200'. The needle 100 may me movable further in the first direction D1 from the second axial position.

Fig. 6 illustrates schematically a method for regulating a bleed flow in a shock absorber. The method comprises providing S1 a needle 100 as disclosed herein, providing S2 the needle 100 in the first axial position such that the first primary bleed flow channel C1 is open and the secondary bleed flow channel C2 is closed, operating S3 the needle 100 to the second axial position such that at least the secondary bleed flow channel C2 is open. The needle 100 may be adapted in size and shape so that when the needle is in the first axial position, the first primary bleed flow channel C1 and the second primary bleed flow channel C3 are open. The needle 100 by which the method adjusts a bleed flow of a shock absorber may be further adapted with any features of the needle 100 according to the first aspect or any embodiment thereof. The present disclosure has mainly been described above with reference to a few embodiments. However, as is readily appreciated by a person skilled in the art, other embodiments than the ones disclosed above are equally possible within the scope of the present disclosure, as defined by the appended claims. Although features and elements are described above in particular combinations, each feature or element can be used alone without the other features and elements or in various combinations with or without other features and elements. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain features are recited in mutually different dependent claims does not indicate that a combination of these features cannot be used to advantage. Any reference signs in the claims should not be construed as limiting the scope.

### ITEMIZED LIST OF EMBODIMENT

### Embodiment 1.

A needle for a valve arrangement of a shock absorber, wherein
the needle is adapted in size and shape to extend along a first axis, and to axially move in a bleed flow opening of a valve arrangement between a first axial position and at least a second axial position to regulate a bleed flow, wherein the needle comprises
a needle portion adapted such to engage with the bleed flow opening to provide a first primary bleed flow channel and a secondary bleed flow channel , wherein
the needle portion is adapted so that when the needle is in the first axial position, the first primary bleed flow channel is open and the secondary bleed flow channel is closed, and when the needle is in the second axial position, at least the secondary bleed flow channel is open, and
wherein the needle portion is adapted so that a channel cross-section of the second flow bleed channel changes at a higher rate than a channel cross-section of the first primary bleed flow channel in response to a change in axial position.

### Embodiment 2.

The needle according to embodiment 1, wherein the needle portion comprises a first primary recess and a secondary recess,
wherein, during use, the needle is axially moveable so that the first primary bleed flow channel is at least partly provided by the first primary recess and the secondary bleed flow channel is at least partly provided by the secondary recess .

### Embodiment 3.

The needle according to embodiment 1 or 2, wherein
the needle is adapted so that the channel cross-section of the first primary bleed flow channel increases when the needle is moved from the first axial position towards an intermediate axial position in a first direction of the first axis, and
the needle is adapted so that the channel cross-section of the secondary bleed flow channel increases when the needle is moved from the intermediate axial position to the second axial position in the first direction of the first axis .

### Embodiment 4.

The needle according to embodiment 3, wherein
the needle is adapted so that when moved from the first axial position, in the first direction the channel cross-section of the first primary bleed flow channel progressively increases, and/or
the needle is adapted so that when moved from the intermediate axial position, in the first direction , the channel cross-section of the secondary bleed flow channel progressively increases.

### Embodiment 5.

The needle according to embodiment 4, wherein the needle portion comprises abutting means adapted to abut against a boundary of the bleed flow opening when the needle is in the first axial position and in the second axial position.

### Embodiment 6.

The needle according to any of embodiments 4 or 5, wherein the first primary recess comprises a primary surface with a surface-normal pointing at least partly away from the first axis and at least partly towards the first axial end .

### Embodiment 7.

The needle according to any of embodiments 4 to 6, wherein the first primary recess comprises a primary surface which is a curved surface.

### Embodiment 8.

The needle according to any of embodiments 4 to 7, wherein the secondary recess is at least partly provided by a V-shaped cut-out.

### Embodiment 9.

The needle according to embodiment 8, wherein the widest part of the V-shaped cut-out is arranged at the first axial end and the corner of the V-shaped cut-out is arranged between the first axial end and the transverse cut.

### Embodiment 10.

The needle according to any of embodiments 4 to 9 wherein the secondary recess divides the first axial end into two portions.

### Embodiment 11.

The needle according to any of embodiments 4 to 10 wherein the needle portion comprises a second primary recess at the first axial end at least partly forming a second primary bleed flow channel.

### Embodiment 12.

The needle according to embodiment 11 wherein the needle portion comprises at least a third primary recess at the first axial end, wherein each primary recess at least partly forms during use a respective primary bleed flow channel.

### Embodiment 13.

The needle according to any of embodiments 11-12, wherein which second primary recess is at least radially symmetrical to the first primary recess.

### Embodiment 14.

The needle according to any of embodiments 11-13, wherein which at least a third primary recess is at least radially symmetrical to at least one of the first primary recess and the second primary recess.

### Embodiment 15.

The needle according to any of embodiments 11-14, wherein the first primary recess and the second primary recess are different in shape.

### Embodiment 16.

The needle according to any preceding embodiment, wherein the needle comprises a needle protrusion at the needle portion, wherein the needle protrusion is adapted to at least partly disrupt the bleed flow exiting at least the first primary bleed flow channel so to create turbulence in the bleed flow.

### Embodiment 17.

A valve arrangement for a shock absorber comprising:
a bleed flow opening, and
a needle according to any preceding embodiment, wherein the needle is adapted to axially move in the bleed flow opening, wherein the first primary bleed flow channel is at least formed between a primary surface of the needle and a primary boundary portion of the bleed flow opening, and the secondary bleed flow channel is at least formed between a secondary surface of the needle and a secondary boundary portion of the bleed flow opening.

### Embodiment 18.

A shock absorber comprising a needle according to any of embodiments 1-17.

### Embodiment 19.

A suspension system for a vehicle, wherein said suspension system comprises at least one shock absorber according to embodiment 18.

### Embodiment 20.

A method for regulating a bleed flow in a shock absorber,
i. providing a needle according to any of embodiments 1-12;
ii. providing the needle in the first axial position such that the first primary bleed flow channel is open and the secondary bleed flow channel is closed;
iii. operating the needle to the second axial position such that at least the secondary bleed flow channel is open.

## Claims

1. A needle (100) for a valve arrangement of a shock absorber, wherein
the needle (100) is adapted in size and shape to extend along a first axis (A), and to axially move in a bleed flow opening (210) of a valve arrangement (200) between a first axial position and at least a second axial position to regulate a bleed flow, wherein the needle (100) comprises
a needle portion (110) adapted such to engage with the bleed flow opening (210) to provide a first primary bleed flow channel (C1) and a secondary bleed flow channel (C2), wherein
the needle portion (110) is adapted so that when the needle (100) is in the first axial position, the first primary bleed flow channel (C1) is open and the secondary bleed flow channel (C2) is closed, and when the needle (100) is in the second axial position, at least the secondary bleed flow channel (C2) is open, and
wherein the needle portion (110) is adapted so that a channel cross-section of the second flow bleed channel (C2) changes at a higher rate than a channel cross-section of the first primary bleed flow channel (C1) in response to a change in axial position.

2. The needle (100) according to claim 1, wherein the needle portion (110) comprises a first primary recess (130) and a secondary recess (140),
wherein, during use, the needle (100) is axially moveable so that the first primary bleed flow channel (C1) is at least partly provided by the first primary recess (130) and the secondary bleed flow channel (C2) is at least partly provided by the secondary recess (140).

3. The needle (100) according to claim 1 or 2, wherein
the needle (100) is adapted so that the channel cross-section of the first primary bleed flow channel (C1) increases when the needle (100) is moved from the first axial position towards an intermediate axial position in a first direction (D1) of the first axis (A), and
the needle (100) is adapted so that the channel cross-section of the secondary bleed flow channel (C2) increases when the needle (100) is moved from the intermediate axial position to the second axial position in the first direction (D1) of the first axis (A).

4. The needle (100) according to claim 3, wherein
the needle (100) is adapted so that when moved from the first axial position, in the first direction (D1) the channel cross-section of the first primary bleed flow channel (C1) progressively increases, and/or
the needle (100) is adapted so that when moved from the intermediate axial position, in the first direction (D1), the channel cross-section of the secondary bleed flow channel (C2) progressively increases.

5. The needle (100) according to claim 4, wherein the needle portion (110) comprises abutting means adapted to abut against a boundary (212) of the bleed flow opening (210) when the needle is in the first axial position and in the second axial position.

6. The needle (100) according to any of claims 4 or 5, wherein the first primary recess (130) comprises a primary surface (132) with a surface-normal pointing at least partly away from the first axis (A) and at least partly towards the first axial end (110).

7. The needle (100) according to any of claims 4 to 6, wherein the first primary recess (130) comprises a primary surface (132) which is a curved surface.

8. The needle (100) according to any of claims 4 to 7, wherein the secondary recess (140) is at least partly provided by a V-shaped cut-out.

9. The needle (100) according to claim 8, wherein the widest part of the V-shaped cut-out is arranged at the first axial end (101) and the corner of the V-shaped cut-out is arranged between the first axial end (101) and the transverse cut (102).

10. The needle (100) according to any of claims 4 to 9 wherein the secondary recess (140) divides the first axial end (101) into two portions.

11. The needle (100) according to any of claims 4 to 10 wherein the needle portion (110) comprises a second primary recess (134) at the first axial end (110) at least partly forming a second primary bleed flow channel (C3) wherein optionally which second primary recess (134) is at least radially symmetrical to the first primary recess (130), and/or the first primary recess (130) and the second primary recess (134) are different in shape.

12. The needle (100) according to any preceding claim, wherein the needle (100) comprises a needle protrusion (150) at the needle portion (110), wherein the needle protrusion (150) is adapted to at least partly disrupt the bleed flow exiting at least the first primary bleed flow channel (C1) so to create turbulence in the bleed flow.

13. A valve arrangement (200) for a shock absorber comprising:
a bleed flow opening (210), and
a needle (100) according to any preceding claim, wherein the needle (100) is adapted to axially move in the bleed flow opening (210), wherein the first primary bleed flow channel (C1) is at least formed between a primary surface (132) of the needle (100) and a primary boundary portion (213a) of the bleed flow opening (210), and the secondary bleed flow channel (C2) is at least formed between a secondary surface (142) of the needle (100) and a secondary boundary portion of the bleed flow opening (210).

14. A shock absorber (300) comprising a needle (100) according to claims 1-12.

15. A method for regulating a bleed flow in a shock absorber,
i. providing (S1) a needle (100) according to any of claims 1-12;
ii. providing (S2) the needle (100) in the first axial position such that the first primary bleed flow channel (C1) is open and the secondary bleed flow channel (C2) is closed;
iii. operating (S3) the needle (100) to the second axial position such that at least the secondary bleed flow channel (C2) is open.
